# EUROPÄISCHE PATENTSCHRIFT

(11) **EP 1 783 650 B1**
(45) Veröffentlichungstag und Bekanntmachung des Hinweises auf die Patenterteilung: **12.01.2011**
(21) Anmeldenummer: 05110041.0
(22) Anmeldetag: 26.10.2005
(51) Int. Cl.: G06F 21/00, G06K 9/36

(54) **Verfahren und Kommunikationssystem, um mit biometrischen Sensoren aufgenommene biometrische Daten mit Referenzdaten zu vergleichen**
Method and communication system for comparing biometric data obtained by means of biometric sensors with reference data
Procédé et système de communication destinés à comparer des données biométriques enregistrées à l'aide de capteurs biométriques avec des données de référence

(43) Veröffentlichungstag der Anmeldung: 09.05.2007
(73) Patentinhaber: Swisscom AG, 3050 Bern (CH)
(72) Erfinder: Ritter, Rudolf, 3052, Zollikofen (CH); Lauper, Eric, 3014, Bern (CH)
(74) Vertreter: P&TS Patents & Technology Surveys SA

(56) Entgegenhaltungen:
- WO-A-01/33494
- WO-A-03/093923
- US-A1- 2004 104 807
- WAYMAN J L ED - INSTITUTE OF ELECTRICAL AND ELECTRONICS ENGINEERS: "DIGITAL SIGNAL PROCESSING IN BIOMETRIC IDENTIFICATION: A REVIEW" PROCEEDINGS 2002 INTERNATIONAL CONFERENCE ON IMAGE PROCESSING. ICIP 2002. ROCHESTER, NY, SEPT. 22 - 25, 2002, INTERNATIONAL CONFERENCE ON IMAGE PROCESSING, NEW YORK, NY : IEEE, US, Bd. VOL. 1 OF 3, 22. September 2002 (2002-09-22), Seiten 37-40, XP001134054 ISBN: 0-7803-7622-6

## Beschreibung

### Technisches Gebiet

Die Erfindung bezieht sich auf ein Verfahren, ein Kommunikationssystem und auf einen Fernserver, um mit biometrischen Sensoren aufgenommene biometrische Daten mit Referenzdaten zu vergleichen entsprechend den unabhängigen Ansprüchen.

### Stand der Technik

Biometrische Sensoren sind aus dem Stand der Technik bereits bekannt. Diese biometrischen Sensoren werden in der Regel zur biometrischen Identifizierung oder Authentifizierung gerade bei sicherheitsrelevanten Systemen oder Anwendungen verwendet. Bei diesen Anwendungen besteht jedoch das Problem, dass unterschiedliche Hersteller von biometrischen Sensoren, andere biometrische Daten- oder Datensätze für gleiche biometrische Merkmale liefern. Daraus folgt, dass biometrische Referenzdaten immer mit demselben Sensortyp aufgenommen werden muss, um später mit von Benutzer aufgenommene biometrischen Daten verglichen werden zu können, da dann das selbe Format vorliegt. Leider ist dies aber nicht immer möglich, da immer verschiedene Komponenten im Spiel sind. So haben zum Beispiel verschiedene Mobiltelefone Fingerabdrucksensoren unterschiedlicher Hersteller implementiert. Wenn in einem Geschäft für eine Dienstleistung ein Referenzfingerabdruck genommen wird und es sich um einen anderen Sensor als der Sensor im Mobilgerät handelt, ist die Sicherheit durch das genannte Problem nicht gewährleistet. Werden die Referenzdaten mit den biometrischen Daten verglichen kann es zu Fehlinterpretationen kommen. Auch könnte der Benutzer nicht einfach sein Mobiltelefon austauschen (z.B. durch Neukauf oder durch Benutzung eines Telefons eines Bekannten), da die Daten dann nicht mehr kompatibel wären.

WO-A1-01/33494 bietet aus diesem Grund eine Normalisierung der biometrischen Daten an. Diese Anpassung wird aber nicht vom Typ des Sensors abhängig gemacht, sondern bezieht sich nur auf die aufgenommenen biometrischen Daten an sich.

WO-A2-02/44999 offenbart ein Verfahren zur Ermittlung einer Fehlerrate für eine biometrische Einrichtung. Zur Fehlerratenermittlung wird ein aktuelles biometrisches Merkmal eines Berechtigten gegen eine Anzahl fremder biometrischer Merkmale getestet und die Fehlerraten werden durch die Häufigkeit der Zugangserteilung für einen Unberechtigten und die Häufigkeit der Abweisung eines Berechtigten festgelegt. In der biometrischen Einrichtung wird unter Verwendung einer Datenbank, welche eine Anzahl von Fremdmerkmalsätzen enthält, ein Testlauf zum Vergleich dieser Fremdmerkmalsätze mit dem Merkmalsatz eines abgespeicherten aktuellen Merkmals des Berechtigten durchgeführt und hieraus werden persönliche Fehlerraten für den Berechtigten ermittelt.

EP-A2-1 160 72 offenbart ebenfalls ein biometrisches Normalisierungsverfahren, um Fehlerraten zu ermitteln.

US-A1-2004/104807 offenbart eine Authentifizierung durch biometrische Fingerabdrucksensoren, die mit einem zentralen Server verbunden sind. Da Sensoren von unterschiedlichen Anbietern eingesetzt werden können, ermittelt der Server zuerst den Typ des Sensors, sendet danach Kontroll- und Optimierungsparameter an den Sensor und ermittelt die biometrischen Daten des Benutzers. Die so ermittelten biometrischen Daten werden mit den Referenzdaten verglichen. Es ist nachteilig jedoch nicht möglich, die biometrischen Daten mit den Referenzdaten ohne Anpassung des Sensors zu vergleichen.

US-A1-2002/0108047 beschreibt ein System, um die Auslösung eines Bildes eines Fingerabdruckes zu konvertieren und einer Vergleichseinheit zur Verfügung zu stellen.

WO-A2-03/093923 betrifft ein System und Verfahren zur biometrischen Authentifizierung.

### Darstellung der Erfindung

Es ist ein Ziel der Erfindung, ein Verfahren und ein Kommunikationssystem zu schaffen, um mit unterschiedlichen biometrischen Sensoren aufgenommene biometrische Daten mit Referenzdaten zu vergleichen.

Erfindungsgemäss wird diese Aufgabe durch die unabhängigen Ansprüche gelöst.

Weilere Ausführungs formen der Erfindung sind in den abhängigen Patentansprüche spezifiziert.

Vorteilhaft ist ein Vergleich von biometrischen Daten, die mit Sensoren unterschiedlicher Hersteller aufgenommen wurden, einfach und zuverlässig möglich.

Die aufgenommenen biometrischen Daten (direkte biometrische Daten, ein daraus erzeugtes Template oder ein aus dem Template daraus erzeugter Hashwert) werden in einem ersten Schritt mit den von Sensor abhängigen Parametern normalisiert und in einem zweiten Schritt die normalisierten biometrischen Daten mit den biometrischen Referenzdaten verglichen. Bei der Normalisierung wird mindestens eine der folgenden Grössen wie Auflösung, Bildgrösse und Bilddateiformat angepasst, wobei eine geometrische Entzerrung, Vignetierungskorrektur, Rauschunterdrückung und Schärfeneinstellung verwendet werden kann.

Es kann auch ein Vergleichsalgorithmus verwendet werden, um die Wahrscheinlichkeiten zu bestimmen, dass die aufgenommenen biometrischen Daten jede möglichen biometrischen Referenzdaten entsprechen, wobei der Vergleichsalgorithmus die vom Sensor abhängigen Parameter einbezieht. Der Vergleichsalgorithmus kann beispielsweise ein Viterbi Algorithmus sein, in welche die Wahrscheinlichkeiten mit den benannten sensorabhängigen Parametern gewichtet wird. Möglich ist auch dass man diese Wahrscheinlichkeiten mit sensorabhängigen Parametern, von dem Sensor mit dem die biometrischen Referenzdaten aufgenommen werden, gewichtet werden.

Als Variante kann auch statt, oder zusätzlich zum Viterbi-Algorithmus, ein neuronales Netz für den Vergleich verwendet werden, bei welchem die Knoten mit den benannten sensorabhängigen Parametern des aufgenommenen Sensors oder des Referenzsensors gewichtet werden. Als weitere Variante können auch Hidden Markov Models (HMM) verwendet werden, bei welchen die Struktur des Models und/oder die Wahrscheinlichkeiten eines Übergangs von diesen Parametern abhängig sind. Möglich ist auch, dass der Viterbi Algorithmus, das HMM Model und/oder das neuronale Netz automatisch angepasst wird, etwa anhand des Baum-Welches Algorithmus, um den Vergleich zwischen den aufgenommenen biometrischen Daten und den entsprechenden Referenzdaten zu ermöglichen, auch wenn diese Daten mit unterschiedlichen Sensortypen aufgenommen wurden.

Die abhängigen Ansprüche stellen bevorzugte Ausführungsformen des erfindungsgemässen Verfahrens und des Kommunikationssystems dar.

### Kurze Beschreibung der Figuren

Die Erfindung wird anhand den beigefügten Figuren näher erläutert, wobei
- Fig. 1: ein erfindungsgemässes System zeigt, mit welchem das Verfahren gemäss der Erfindung durchgeführt werden kann und
- Fig. 2: die Erzeugung eines normierten Wertes aus den vom Sensor aufgenommen biometrischen Daten, hier exemplarisch für einen aufgenommenen Fingerabdruck.

### Wege zur Ausführung der Erfindung

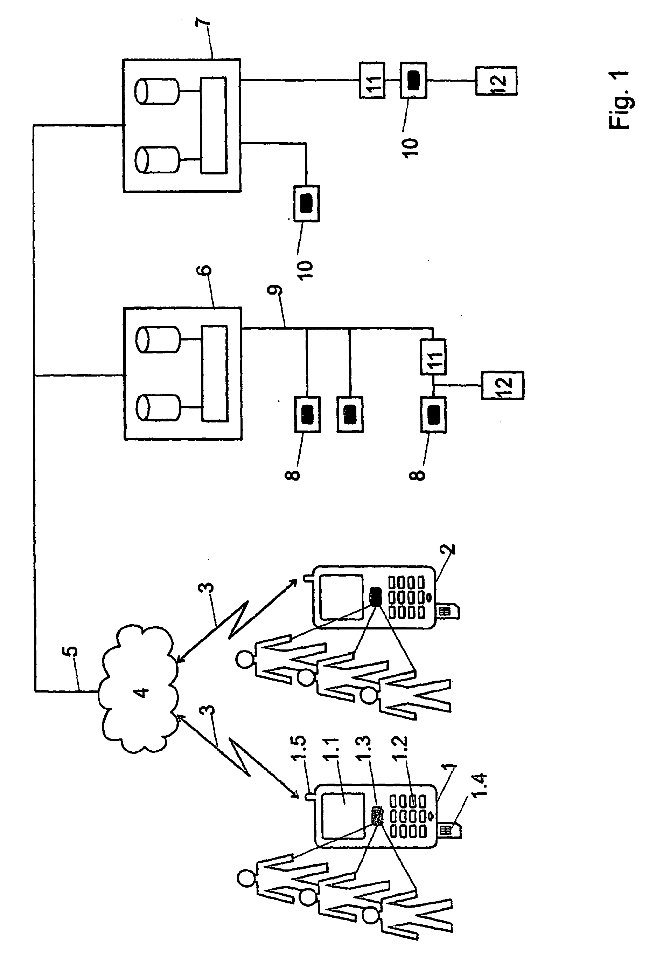

Die Fig. 1 zeigt ein erfindungsgemässes System, welches zur Ausführung der vorliegenden Erfindung geeignet ist. Es handelt sich um ein Verfahren, um eine Zugangsberechtigung zu einem Objekt oder einer Dienstleistung zu erlangen. Als Dienstleistung kann beispielsweise ein Hotelzimmer, eine Ferienwohnung oder eine Ressource in einem Gebäude für einen bestimmten Zeitraum gebucht werden oder ein Ticket für ein Konzert, eine Ausstellung oder eine andere Veranstaltung (Besuch einer Diskothek, Gala, Kinobesuch, etc.) reserviert werden. Auch für Ausleihen oder Vorbestellungen von anderen Gegenständen (Ausleihen eines Fahrrades, Einkauf von speziellen, vorbestellten Produkten, Fahrkartenbestellung, etc.) ist das vorliegende Verfahren vorteilhaft geeignet.

Ein Benutzer ist mit einem persönlichen Mobilgerät 1 ausgestattet. Als Mobilgerät 1 oder als Mobilstation eignen sich eine Reihe von Geräten, ein mobiles Telefon, ein tragbarer Computer, ein PDA oder eine vernetzte Spielstation. Das Mobilgerät 1 ist mit einem Display 1.1 und einer Tastatur 1.2 ausgestattet. Gleichzeitig ist ein biometrischer Sensor 1.3 integriert, mit welchem ein biometrischer Parameter des Benutzers aufgenommen werden kann. Es ist selbstverständlich, dass auch Eingabemittel des Mobilgeräts 1 (Tastatur, Maus, etc.) mit einem solchen Sensor 1.3 ausgestattet werden oder als ein solcher Sensor 1.3 wirken können. Es ist im Rahmen der Erfindung denkbar, dass sich das Mobilgerät 1 über eine drahtlose Schnittstelle in Nahbereich (IrDA, Bluetooth, ZigBee, etc.) mit einem solchen Modul verbindet. Ein Zusatzmodul, welches über eine drahtbehaftete Schnittstelle (beispielsweise eine USB-Schnittstelle) mit dem Mobilgerät 1 verbunden ist, ist im Rahmen der Erfindung möglich.

In dem in der Fig. 1 dargestellten Ausführungsbeispiel handelt es sich bei der Mobilstation um ein Mobiltelefon, welche mit einer SIM-Karte als Identifizierungsmodul 1.4 und einer Mobilantenne 1.5 ausgestattet und in einem Mobilfunknetz 4 eingebunden ist. Im Rahmen der Erfindung sind allgemeine Kommunikationsnetze denkbar, Mobilnetze wie GSM, GPRS, EDGE, WLAN oder UMTS genauso wie das Internet oder andere Fixnetze, sowie Verbindungen nach dem UMA Konzept (UMA steht für Unlicensed Mobile Access, z.B. Bluetooth oder Systeme nach dem Standard 802.11x, vgl. www.umatechnology.org).

Entsprechend einem ersten Ausführungsbeispiel der vorliegenden Erfindung wird ein Benutzer, der Zugang zu einem oben genannten Objekt oder zu einer Dienstleistung erhalten will, seine biometrischen Daten (Referenzparameter) von dem biometrischen Sensor 1.3 des Mobilgeräts 1 abnehmen lassen und über ein Kommunikationsnetz an einen Fernserver 6, 7 übertragen. Der Fernserver 6, 7 wird von einem Anbieter des Objekts oder der Dienstleistung oder von einem anderen Verwalter betrieben. Der Fernserver 6, 7 kann auch ein Dienstserver von einem Netzbetreiber (MNO, mobile network operator) oder ein Dienstserver für Value Added Services sein. In der Fig. 1 erfolgt die Übertragung beispielsweise signiert und verschlüsselt über eine Mobilfunkschnittstelle 3 und eine Kommunikationsverbindung 5. Die Verschlüsselung mindestens der sensitiven biometrischen Daten des Benutzers erhöht zusätzlich die Datensicherheit des erfindungsgemässen Verfahrens und schützt vor Missbrauch der übermittelten Daten. Anstatt die ursprünglichen biometrischen Referenzparameter an den Fernserver 6, 7 zu übertragen, was die Benutzer möglicherweise nicht akzeptieren könnten, kann eine abgeleitete Form, ein sog. Template, eine Signatur oder ein Hashwert berechnet und übertragen werden. Derselbe Algorithmus muss dann bei der Aufnahme in der Mobilstation des biometrischen Referenzparameters und bei der Aufnahme im biometrischen Sensor 8, 10 des Objekt- oder Dienstanbieters verwendet werden.

In einem vorteilhaften Ausführungsbeispiel der Erfindung bietet der Anbieter des Objekts oder der Dienstleistung oder ein anderer Hersteller ein Softwareprogramm an, das der Benutzer auf sein Mobilgerät 1 herunterlädt und mit welchem er die Bestellung vornimmt und/oder welches die Verschlüsselung der biometrischen Daten oder auch anderer übertragener Daten (Reservierungsdetails, persönliche Daten, personengebundener Code, etc.) übernimmt. Die Verschlüsselung könnte auch von der SIM-Karte der Mobilstation übernommen werden oder zumindest können die Schlüssel für die symmetrische oder asymmetrische Verschlüsselung in der SIM-Karte oder im Mobilgerät gespeichert werden. Das Programm kann beispielsweise als Applet lediglich temporär während der Reservierung des Objekts oder der Dienstleistung auf dem Mobilgerät 1 installiert werden. Die biometrischen Referenzparameter könnten auch auf der bereits genannten SIM-Karte des Mobilgeräts 1 oder in einem anderen Speicher des Mobilgeräts 1 abgelegt sein und von dort aus abgerufen werden. Das heruntergeladene Softwareprogramm kann dann vorteilhaft auf die abgespeicherten Daten zurückgreifen, ohne dass jedes Mal die biometrischen Daten neu vom Erzeuger erzeugt werden müssen.

Eine einfache biometrische Erfassung ist mit einem Fingerabdrucksensor als biometrischer Sensor 1.3 zu realisieren. Andere biometrische Daten wie Gesichts-, Retina-, Iris- oder Venenerkennung, Sprachanalyse, Pulsaufnahme, Körperstromaufnahme, etc. sind im Rahmen der Erfindung denkbar und können mittels eines im Mobilegerät 1 eingebauten Kamera oder Sensor aufgenommen werden. Für die Spracherkennung wird der erwähnte biometrische Sensor 1.3 ein Mikrofon sein. Um daraus Schlüsseldaten des Benutzers, wie einen eindeutigen Code, einen numerische Parameter oder einen Hashcode, etc. abzuleiten, wird in dem Mobilgerät 1 eine entsprechende Software installiert sein, die auf den biometrischen Sensor 1.3 zugeschnitten ist und die aufgenommenen Daten weiter verarbeitet.

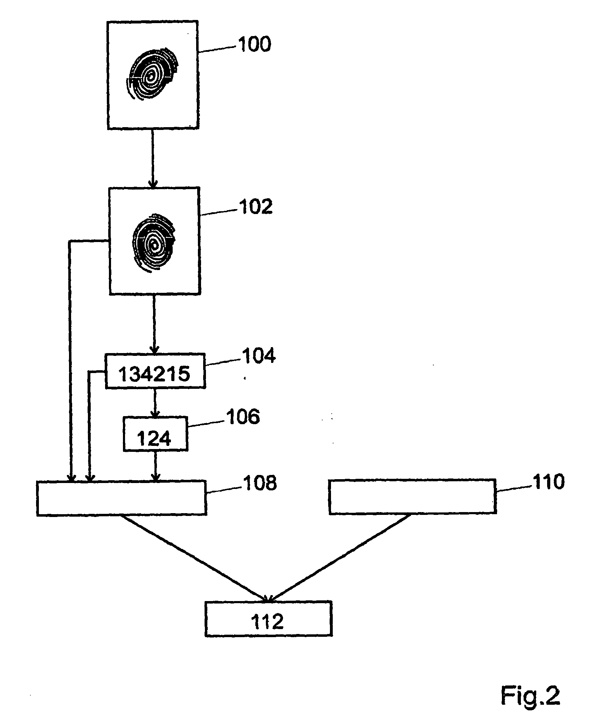

Ein Beispiel zur Abnahme von Fingerabdrücken mit den genannten Sensoren 1.3, 8 sind kapazitive Fingerabdrucksensoren, die Kapazitäten zwischen der Fläche eines Silikon-Sensors und der Haut messen. Die gemessenen Kapazitäten werden in einem 8-bit-Graustufenbild des aufgenommenen Fingerabdruckes dargestellt (vgl. Fig. 2, vom Sensor 1.3, 8 aufgenommener Fingerabdruck 100). Nachdem ein Bild eines Fingerabdrucks aufgenommen wurde, müssen von Sensor 1.3, 8 weitere Bildbearbeitungsschritte erfolgen, bevor eine verwendbare biometrische Signatur ermittelt werden kann. Dazu werden bereits von dem Sensor Algorithmen zur Verbesserung der Bildqualität (z.B. Hoch- und Tiefpassfilter) verwendet und das Bild digitalisiert bzw. in einem sensorinternen Prozess normiert (vgl. Fig. 2, normiertes Fingerabdruckbild 102). Schliesslich werden die personenspezifischen Merkmale extrahiert und die extrahierten Daten in einem so genannten Template 104 gespeichert, welches dem oben erwähnten numerischen Parametern entspricht. Dabei ist beispielsweise eine minutienbasierte Merkmalsextraktion eine häufig verwendete Methode, die vorgefertigte Verarbeitungsschritte (Gewinnung des Graustufenbildes, Berechnung des Richtungsfeldes, Extraktion des Vordergrundanteils, Herausfiltern der Hintergrundanteils und Digitalisierung, Berechnung des Skelettes mit markierten Minutien, Überlagerung der Minutien mit dem Original Graustufenbild) enthält. Die minutienbasierte Merkmalsextraktion reduziert das Problem des Vergleichs zweier Fingerabdrücke auf einen Vergleich von Punkten oder Graphen und braucht daher erheblich weniger Rechenkapazität. Aus dem Template oder dem numerischen Parameter kann ein eindeutiger Hashwert 106 erzeugt, der ebenfalls zum Vergleich herangezogen werden kann. Normiertes Fingerabdruckbild, Template oder Hashwert, sind aber von dem Sensortyp, von der gewählten Auflösung, etc. abhängig, so dass diese Werte erfindungsgemäss ausserhalb des Sensors mit den sensorabhängigen Parametern normiert werden (Fig. 2, normierte Wert 108) und dieser normierte Wert 108 mit den biometrischen Referenzdaten 110 verglichen werden kann (Fig. 2, Schritt 112).

Andere Verfahren, die oben erwähnt wurden, um biometrische Daten zu ermitteln, weisen ähnliche Schritte und Vorgehensweisen auf, um zu einem normierten Werte 108 zu gelangen, der zum Vergleich 112 herangezogen wird.

Während der Veranstaltung, etc. wird der biometrischen Referenzparameter vom Fernserver 6 an ein mit dem biometrischen Sensor 8 des Objekt- oder Dienstanbieters verbundenes Vergleichsmodul 11 oder die biometrischen Ist-Parameter des Benutzers, die vom biometrischen Sensor 8 aufgenommen werden, an den Fernserver 6 übertragen. Der Vergleich der biometrischen Parameter (Referenz mit Ist) kann also problemlos vor Ort durchgeführt werden, bevor der Zugang zum Objekt erlaubt wird.

Um diesen Vergleich durchführen zu können werden in dem gegebenen Ausführungsbeispiel nicht nur die biometrischen Daten aufgenommen, sondern auch der Sensortyp bestimmt. Im Fernserver 6, 7 wird in Abhängigkeit von Typ des Sensors 1.3, 8 vom Sensor 1.3, 8 abhängige Parametern ermittelt. Die aufgenommenen biometrischen Daten, also Fingerabdruckbild, Template oder Hashwert, werden mit den biometrischen Referenzdaten verglichen, wobei erfindungsgemäss beim Vergleich die vom Sensor 1.3, 8 abhängigen Parameter einbezogen werden. Die aufgenommenen biometrischen Daten werden in einem ersten Schritt mit den von Sensor 1.3, 8 abhängigen Parametern normalisiert und in einem zweiten Schritt die normalisierten biometrischen Daten 108 (Fig. 2) mit den biometrischen Referenzdaten 110 verglichen (Fig. 2, Vergleich 112). Bei der Normalisierung kann mindestens eine der folgenden Grössen Auflösung, Bildgrösse und Bilddateiformat angepasst werden, wobei eine geometrische Entzerrung, Vignetierungskorrektur, Rauschunterdrückung und Schärfeneinstellung verwendet werden kann.

Das erfindungsgemässe Verfahren sieht auch vor, dass die aufgenommenen biometrischen Daten mit anderen Identifizierungsdaten des Benutzers oder des Geräts 1, die aus einer Chip- oder der SIM-Karte 1.4 gelesen werden können, verknüpft werden. Dies wird weiter unten in einem Ausführungsbeispiel noch beschrieben.

Es kann auch ein Vergleichsalgorithmus verwendet werden, um die Wahrscheinlichkeiten zu bestimmen, dass die aufgenommenen biometrischen Daten jede möglichen biometrischen Referenzdaten entsprechen, wobei der Vergleichsalgorithmus die vom Sensor abhängigen Parameter einbezieht. Der Vergleichsalgorithmus kann beispielsweise ein Viterbi Algorithmus sein, in welche die Wahrscheinlichkeiten mit den benannten sensorabhängigen Parametern gewichtet wird. Möglich ist auch dass man diese Wahrscheinlichkeiten mit sensorabhängigen Parametern, von dem Sensor mit dem die biometrischen Referenzdaten aufgenommen werden, gewichtet wird.

Als Variante kann auch statt, oder zusätzlich zum Viterbi-Algorithmus, ein neuronales Netz für den Vergleich verwendet werden, bei welchem die Knoten mit den benannten sensorabhängigen Parametern des aufgenommenen Sensors oder des Referenzsensors gewichtet werden. Als weitere Variante können auch Hidden Markov Models (HMM) verwendet werden, bei welchen die Struktur des Models und/oder die Wahrscheinlichkeiten eines Übergangs von diesen Parametern abhängig sind. Möglich ist auch, dass der Viterbi Algorithmus, das HMM Model und/oder das neuronale Netz automatisch angepasst wird, etwa anhand des Baum-Welches Algorithmus, um den Vergleich zwischen den aufgenommenen biometrischen Daten und den entsprechenden Referenzdaten zu ermöglichen, auch wenn diese Daten mit unterschiedlichen Sensortypen aufgenommen wurden.

Die übermittelten biometrischen Referenzdaten können ebenfalls normiert abgespeichert werden, wobei vorher ein Format definiert werden muss. Es ist auch denkbar, dass die biometrischen Referenzdaten und Parameter, die von dem Sensor stammen, mit dem die Referenzdaten aufgenommen wurden, abgespeichert werden. Auf diese Weise wird das Format der biometrischen Referenzdaten festgelegt.

In einem Ausführungsbeispiel ist der Fernserver 6 an ein Hotelmanagementsystem angeschlossen. Der Benutzer schickt seine Reservierungsdetails, wie Datum der An- und Abreise, Anzahl und Auswahl der Zimmer, Anzahl der Mahlzeiten, etc., die er beispielsweise in dem Applet eingibt, zusammen mit den biometrischen Daten von seinem persönlichen Mobilgerät 1 an den Fernserver 6. Gleichzeitig können auch persönliche Daten, wie Name, Anschrift, Rechnungsdetails übertragen werden, sofern diese noch nicht im Fernserver 6 vorhanden sind. Der Fernserver 6 sendet nach Empfang der Meldung und nach entsprechender Reservierung eine Bestätigungsmeldung an das persönliche Mobilgerät 1 zurück, die beispielsweise die Zimmer- oder Sitznummer oder weitere Einzelheiten umfasst. Aufgrund der oben genannten Kommunikationsnetze sind eine Vielzahl von Meldungen für Reservierung und Bestätigungsmeldung möglich: SMS, MMS, USSD, E-mail, Web- oder WAP-Seite, etc. können problemlos verwendet werden.

Für die Dauer der Benutzung des Hotelzimmers oder der Ferienwohnung werden der biometrische Referenzparameter oder die daraus abgeleitete Schlüsseldaten des Benutzers aus dem Fernserver 6 mit einem biometrischen Sensor 8 logisch verbunden. Der biometrische Sensor 8 befindet sich an der Hotelzimmertür oder der Tür der Ferienwohnung. Es können selbstverständlich verschiedene biometrischen Sensoren 8 an verschiedenen Türen, die zum selben oder zu verschiedenen Objekten führen, vorhanden sein. So kann der Benutzer gleichzeitig reservieren, dass er neben dem Zugang zu seinem Zimmer auch einen Zugang zu einem Fitnessraum, zu einer Sauna oder zu einer Tiefgarage erlangt. Der Benutzer kann sich nun an dem biometrischen Sensor 8 durch Abnahme des biometrischen Ist-Parameters und Vergleich mit den in dem Fernserver 6 gespeicherten Daten authentisieren und Zugang zum Objekt oder zur Dienstleistung erlangen. Der biometrische Sensor 8 ist hierfür mit einem Modul 11 zum Vergleich von gespeicherten biometrischen Referenzparametern und aufgenommenen Ist-Parametern verbunden. Die angesprochene Normierung der aufgenommenen biometrischen Daten findet wie oben beschrieben mit Parametern statt, die in Abhängigkeit vom Sensortyp im Fernserver 6,7 ermittelt werden. Gleichzeitig ist der biometrische Sensor 8 mit Mitteln 12 verbunden, die den Zugang zur Zimmertür (oder zu einem anderen Objekt) kontrollieren. Vorteilhaft braucht sich der Benutzer nicht mehr lange an der Rezeption einzuschreiben, da im Fernserver 6 des Hotelmanagementsystems bereits alle Daten des Benutzers vorhanden sind und der Benutzer die Zimmernummer, Anreisetag, die Zeit des Frühstücksbuffets, etc. bereits in der Bestätigungsmeldung vom Fernserver 6 erhalten hat. Wichtig ist dabei anzumerken, dass die Aufnahme des biometrischen Referenzparameters und die Aufnahme des biometrischen Ist-Parameters von zwei unterschiedlichen Sensoren gemacht werden.

Wenn mit dem gleichen System eine Ferienwohnung für die ganze Familie gebucht wird, könnte der Hauptbenutzer in seinem Mobilgerät 1 eine Gruppe 2 definieren, und die biometrischen Referenzparameter aller Familienmitglieder in dieser Gruppe 2 abspeichern. Bei der Reservierung werden die biometrischen Daten der Gruppe 2 an den Fernserver 6 übertragen. Während der Ferien werden nun im besagten Fernserver 6 die Daten aller Familienmitglieder gespeichert. Jedes Familienmitglied erlangt so eine individuelle Zugangsberechtigung für die Ferienwohnung, ohne separat an der Rezeption eine Schlüssel zu verlangen oder sich einschreiben zu müssen. Der Hauptbenutzer ist in diesem Fall für Abrechnung für die ganze Gruppe 2, seine Familie, seine Arbeitskollegen, die Mitglieder der Gruppe 2 sind, etc. gegenüber dem Hotel oder dem Vermieter der Ferienwohnung verantwortlich. Der Vorteil liegt darin, dass die anderen Zugriffsberechtigten ohne persönliche Mobilstation auf die reservierten Objekte oder Dienstleistungen zugreifen können.

Nach demselben Prinzip kann als biometrische Parameter eine Sequenz von Fingerabdrücken oder anderen biometrischen Merkmalen erfasst werden. Wenn die Fehlerrate für die fehlerhafte Akzeptanz eines nicht berechtigten Fingers 10⁵ beträgt, sinkt diese Fehlerrate zu 10¹⁰ bei einer Sequenz von zwei Fingern oder anderen biometrischen Merkmalen.

Im zweiten Beispiel, welches in der Fig. 1 dargestellt ist, ist ein Fernserver 7 Teil eines Konzertveranstalters oder einer Organisation, die Karten für Konzerte, Galaveranstaltungen, Kinovorstellungen vertreibt. Wiederum sendet der Benutzer durch sein persönliches Mobilgerät 1 eine Meldung mit allen Reservierungsdaten, Konzert, Name der Gruppe 2, Kinofilm, etc. zusammen mit seinen persönlichen biometrischen Referenzparametern verschlüsselt an den Fernserver 7, um eine Reservierung vorzunehmen. Der Fernserver 7 speichert die Daten und sendet auf dem beschriebenen Weg eine Bestätigungsmeldung an den Benutzer. Am Tag des Konzerts werden die persönlichen Daten (biometrischen Referenzparameter) des Benutzers vom Fernserver 7 über eine lokale Verbindung 9 oder andere Kommunikationsverbindung mit den biometrischen Sensoren 10 verbunden und in einem Vergleichmodul 11 abgelegt. Es ist auch denkbar, dass die aufgenommenen biometrischen Ist-Parameter vom biometrischen Sensor 11 an den Fernserver 7 gesendet werden. Die Sensoren 10 sind am Eingang des Kinos oder der Konzerthalle angebracht. Der Besucher der Veranstaltung authentisiert sich am Eingang an dem biometrischen Sensor 10 durch Abnahme des biometrischen Parameters und Vergleich mit den gespeicherten Daten und erlangt so den Zugang zur von ihm reservierten Veranstaltung. Gekoppelt mit der Eingabe eines einzigen Codes wie beispielsweise eine Sitznummer während der Eingabe des biometrischen Ist-Parameters kann die Identität des Zugriffberechtigten lediglich verifiziert werden, was die Komplexität der Überprüfung vereinfacht.

In einer vorteilhaften Variante des erfinderischen Verfahrens können für verschiedene Finger des Benutzers unterschiedliche Zugangsrechte zu verschiedenen Objekten oder Dienstleistungen in dem erfindungsgemässen Verfahren vergeben werden. Aus Sicherheits- und Datenschutzgründen können nach Ende der Dauer der Benutzung des Objekts oder der Dauer der Dienstleistung der biometrische Referenzparameter oder die daraus abgeleitete Schlüsseldaten des Benutzers aus dem benannten Fernserver gelöscht werden, so dass kein Missbrauch mit den biometrischen Daten geschehen kann.

In einer zweiten Variante der Erfindung werden bei der Bestellung mit den Details der Bestellung zusätzlich ein weiterer personengebundener Code an den Fernserver 6, 7 übermittelt. Dies könnte die Telefonnummer oder ein anderer Code sein, der in der Mobilstation gespeichert ist. Dies kann zum Beispiel die SensorlD, die IMEI, die IMSI, ein PIN, ein EPIN, etc. sein. Vor der Veranstaltung, etc. geht der Benutzer zu dem Veranstaltungsort und authentisiert sich an einem biometrischen Sensor 8, 10, der sich am Objekt oder an der Dienstleistung befindet und mit den Mittel 12, die den Zugang kontrollieren, verbunden ist. Der in der Mobilstation gespeicherte biometrische Referenzparameter wird über eine kontaktlose Schnittstelle im Nahbereich (Bluetooth, IrDA, ZigBee, NFC (RFID), etc.) von der Mobilstation an ein mit dem biometrischen Sensor verbundenes Vergleichmodul 11 übertragen. Der biometrische Sensor nimmt den Ist-Parameters des Benutzers auf und im Vergleichmodul 11 wird der biometrische Referenzparameter mit dem Ist-Parameter auf die erfindungsgemässe Weise verglichen. Zusätzlich wird der personengebundene Code, der bei der Bestellung hinterlegt wurde, vom Fernserver 6, 7 an das mit dem biometrischen Sensor verbundene Vergleichsmodul 11 oder vom Vergleichsmodul 11 an den Fernserver 6, 7 übertragen. Der Vergleich der biometrischen Parameter und des personengebundenen Codes kann also problemlos vor Ort durchgeführt werden, bevor der Zugang zum Objekt erlaubt wird.

Auf die gleiche Weise können auch Dinge vorbestellt werden. Wenn ein Benutzer mit seiner Familie Fahrräder ausleihen möchte, reserviert er auf die hier beschriebene Weise die Fahrräder im Vorwege und identifiziert sich an einem biometrischen Sensor in einem Geschäft oder hat Zugang zu den Gegenständen, die an einem bestimmten, abgeschlossen Ort (Fahrradschuppen, Garage, etc.) abgestellt sind. Die Garage ist ebenso durch einen biometrischen Sensor abgeschlossen. Auch die Reservierung anderer Gegenstände ist durch das erfindungsgemässe Verfahren möglich. Der Benutzer kann eine Fahrkarte reservieren und anstatt lange an einem Schalter anzustehen, kann er sich an einem Automaten biometrischen authentisieren und die Fahrkarte wird von dem Automaten ausgedruckt. Dies kann ohne Zeitverlust direkt vor der Abfahrt des Zuges geschehen. In der gleichen Weise kann auch ein Skilift kontrolliert werden, wobei der Skipass elektronisch auf der genannten Weise vorbestellt wird und die Authentisierung vor dem Einsteigen geschieht. Ein Drehkreuz oder eine andere Zugangsbeschränkung zum Lift wird erst freigegeben, wenn die biometrische Authentisierung des Benutzers positiv ist.

Der temporäre Zugang zum Objekt oder zur Dienstleistung kann über die Telefonrechnung, über eine Prepaidkonto oder über eine Kreditkarte des Benutzers abgerechnet werden. Der Benutzer könnte ein eigenes Konto bei der Ticketagentur oder dem Hotel über das Internet oder das Mobiltelefon eröffnen und in diesem Konto den Modus der Abrechung (Kreditkarte, Prepaid, monatliche Abrechnung, etc.) angeben. Er kann sich durch Einloggen in dieses Konto jederzeit einen Überblick über vorgenommene und abgelaufene Reservierungen oder aufgelaufene Kosten verschaffen. Bei der Übermittelung der Reservierung durch den Benutzer an den Veranstalter oder Dienstanbieter wird in diesem Fall auch gleichzeitig das Konto des Benutzers auf die von ihm vorbestimmte Weise belastet. Die Abrechnung könnte selbstverständlich auch über die Telefonrechnung eines Mobiltelefonteilnehmers vorgenommen werden. In diesem Fall werden die Kosten von der Telefongesellschaft eingezogen und an den Veranstalter oder den Anbieter einer Dienstleistung weitergeleitet.

Die vorliegende Erfindung bezieht sich auch auf ein Kommunikationssystem, um mit unterschiedlichen biometrischen Sensoren 1.3, 8 aufgenommene biometrische Daten mit Referenzdaten zu vergleichen, mit den in der Beschreibung angegebenen Vorrichtungsmerkmalen. Das erfindungsgemässe Verfahren und System erlaubt vorteilhaft einen einfachen und zuverlässigen Vergleich von biometrischen Daten, die mit Sensoren unterschiedlicher Hersteller aufgenommen wurden. Eine zentrale, permanente Speicherung der biometrischen Daten ist vorteilhaft nicht vorgesehen.

### Bezugszeichenliste

- 1: Mobilgerät
- 1.1: Display
- 1.2: Tastatur
- 1.3: Biometrischer Sensor
- 1.4: Identifikationsmodul
- 1.5: Mobilantenne
- 2: Gruppe
- 3: Mobilfunkschnittstelle
- 4: Mobilfunknetz
- 5: Kommunikationsverbindung
- 6: Fernserver
- 7: Fernserver
- 8: Biometrischer Sensor
- 9: Lokale Verbindungen
- 10: Biometrischer Sensor
- 11: Vergleichmodul
- 12: Mittel, die den Zugang zum Objekt oder zur Dienstleistung kontrollieren
- 100: Vom Sensor aufgenommener Fingerabdruck
- 102: Normiertes Fingerabdruckbild
- 104: Template
- 106: Hashwert
- 108: Normierter Wert
- 110: biometrische Referenzdaten
- 112: Vergleich Normierter Wert 108 mit biometrischen Referenzdaten 110

## Patentansprüche

1. Ein Verfahren, um mit unterschiedlichen biometrischen Sensoren (1.3, 8) aufgenommene biometrische Daten mit Referenzdaten zu vergleichen, mit folgenden Verfahrensschritten
(a) biometrische Daten (100, 102, 104, 106) werden von dem biometrischen Sensor (1.3, 8) aufgenommen, (b) der Sensortyp wird bestimmt, und
(c) die aufgenommenen biometrischen Daten (108) werden mit biometrischen Referenzdaten (110) verglichen,
**dadurch gekennzeichnet, dass**
(d) vom Sensor (1.3, 8) abhängige Parameter, die zur Normierung der vom Sensor (1.3. 8) aufgenommenen biometrischen Daten (108) dienen, in Abhängigkeit vom Typ des Sensors (1.3, 8) ausserhalb des Sensors (1.3, 8) ermittelt werden, wobei die aufgenommenen biometrischen Daten (100, 102, 104, 106) in einem ersten Schritt mit den vom Sensor (1.3, 8) abhängigen Parametern normalisiert und in einem zweiten Schritt die normalisierten biometrischen Daten (108) mit den biometrischen Referenzdaten (110) verglichen werden.

2. Das Verfahren gemäss Anspruch 1, **dadurch gekennzeichnet, dass** mindestens eine der folgenden Grössen Auflösung, Bildgrösse und Bilddateiformat bei den aufgenommenen biometrischen Daten (100, 102, 104, 106) mit den vom Sensor abhängigen Parametern normalisiert wird.

3. Das Verfahren gemäss Anspruch 1 oder 2 **dadurch gekennzeichnet, dass** bei der Normalisierungmindestens einer der folgenden Schritte geometrische Entzerrung, Vignetierungskorrektur, Rauschunterdruckung und Schärfeneinstellung verwendet wird.

4. Das Verfahren gemäss einem der Ansprüche 1 bis 3, in welchem der benannte Sensor (1.3, 8) mit einem Gerät (1) lokal verbunden wird, in welchem die besagten sensorabhängigen Parameter in einem Fernserver abgelegt werden und in welchem der Fernserver (6, 7) mit dem benannten Gerät (1) zum Vergleich der biometrischen Daten (108) verbunden wird.

5. Das Verfahren gemäss einem der Ansprüche 1 bis 3, in welchem der Vergleich im benannten Fernserver (6, 7) durchgeführt wird und die aufgenommenen biometrischen Daten an den Fernserver (6, 7) gesendet werden.

6. Das Verfahren gemäss Anspruch 4 in welchem der Vergleich lokal in dem benannten Gerät (1) durchgeführt wird und die besagten sensorabhängigen Parameter an das Gerät (1) gesendet werden.

7. Das Verfahren gemäss einem der Ansprüche 4 bis 6, in welchem die benannten biometrischen Referenzdaten in einer Chipkarte (1.4) im benannten Gerät (1) abgelegt sind.

8. Das Verfahren gemäss einem der Ansprüche 1 bis 7, in welchem der benannte Sensor (1.3, 8) aus den aufgenommenen biometrischen Daten (100, 102) numerische Parameter (104) extrahiert und die extrahierten numerischen Parameter (104) für den benannten Vergleich (112) verwendet werden.

9. Das Verfahren gemäss einem der Ansprüche 1 bis 8, in welchem ein Hash (106)aus den aufgenommenen biometrischen Daten erzeugt wird und der Hash (106) für den benannten Vergleich (112) verwendet wird.

10. Das Verfahren gemäss einem der Ansprüche 1 bis 9, in welchem die aufgenommenen biometrischen Daten mit anderen Identifizierungsdaten des Benutzers oder eines Geräts (1) des Benutzers verknüpft werden.

11. Das Verfahren gemäss Anspruch 10, in welchem die benannten anderen Identifizierungsdaten des Benutzers oder des Geräts (1) aus der Chipkarte (1.4) gelesen werden.

12. Das Verfahren gemäss einem der Ansprüche 1 bis 11, **dadurch gekennzeich net, dass** die biometrischen Referenzdaten normiert abgespeichert werden.

13. Das Verfahren gemäss einem der Ansprüche 1 bis 12, **dadurch gekennzeichnet, dass** die biometrischen Referenzdaten und Parameter, die von dem Sensor stammen, mit dem die Referenzdaten aufgenommen wurden, abgespeichert werden.

14. Das Verfahren gemäss einem der Ansprüche 1 bis 13, **dadurch gekennzeichnet, dass** ein Vergleichsalgorithmus verwendet wird, um die Wahrscheinlichkeiten zu bestimmen, dass die aufgenommenen biometrischen Daten jede möglichen biometrischen Referenzdaten entsprechen, wobei der Vergleichsalgorithmus die vom Sensor (1.3, 8) abhängigen Parameter einbezieht.

15. Das Verfahren gemäss Anspruch 14, **dadurch gekennzeichnet, dass** der Vergleichsalgorithmus eine Viterbi-Algorithmus verwendet, in welchem die Wahrscheinlichkeiten mit den benannten sensorabhängigen Parametern gewichtet werden.

16. Das Verfahren gemass Anspruch 14 oder 15 **dadurch gekennzeichnet, dass** der Vergleichsalgorithmus eine Viterbi-Algoritfimus verwendet, in welchem die Wahrscheinlichkeiten mit sensorabhängigen Parametern, von dem Sensor (1.3, 8) mit dem die biometrischen Referenzdaten aufgenommen werden, gewichtet werden.

17. Das Verfahren gemäss einem der Ansprüche 1 bis 16 in welchem eine Sequenz von biometrischen Merkmalen nacheinander verglichen wird.

18. Das Verfahren gemäss einem der Anspruche 1 bis 17 in welchem als biometrische Daten ein Fingerabdruck, ein Iris-, Retina- oder Gesichtsscan, eine Venen- oder Spracherkennung verwendet wird.

19. Kommunikationssystem, um mit unterschiedlichen biometrischen Sensoren (1.3, 8)
aufgenommene biometrische Daten (100, 102, 104, 106) mit Referenzdaten (110) zu
vergleichen, bestehend aus
(a) einem lokalen Gerät (1), welches mit einem biometrisehen Sensor (1.3, 8) für die
Aufnahme von biometrischen Daten (100, 102, 104, 106) des Benutzers verbunden ist, und
(b) einem Fernserver (6, 7), in dem vom Sensor (1.3, 8) abhängige Parameter gespeichert
sind, wobei
(c) zwischen dem lokalen Gerat (1) und dem Fernserver (6, 7) Daten austauschbar sind,
**dadurch gekennzeichnet, dass**
(d) vom Sensor (1.3. 8) abhängige Parameter, zur Normierung der vom Sensor (1.3. 8) aufgenommenen biometrischen Daten (108) dienen in Abhängigkeit von Typ des Sensors (1.3, 8) ausserhalb des Sensors (1.3, 8) ermittelt werden, wobei die aufgenommenen biometrischen Daten (100, 102,104, 106) mit den vom Sensor (1.3,8) abhängigen Parameter normalisiert und die **dadurch** gewonnenen normalisierten biometrischen Daten (108) mit den biometrischen Referenzdaten (110) verglichen werden.

20. Kommunikationssystem gemäss Anspruch 19, in welchem die genannten abhängigen Parameter in dem Fernserver (6, 7) gespeichert sind.

## Claims

1. Method for comparing biometric data recorded with different biometric sensors (1.3, 8) with reference data, with the following method steps:
(a) biometric data (100, 102, 104, 106) are recorded by the biometric sensor (1.3, 8),
(b) the type of sensor is determined, and
(d) the recorded biometric data (108) are compared with reference data (110), and
**characterized in that**
(d) parameters dependent on the sensor (1.3, 8), which are for normalization of the biometric data (108) taken from the sensor (1.3, 8) are determined depending on the type of the sensor (1.3, 8) outside the sensor (1.3, 8), wherein
(e) the recorded biometric data (100, 102, 104, 106) are standardized in a first step with the parameters dependent on the sensor (1.3, 8) and the standardized biometric data (108) are compared in a second step with the biometric reference data (110).

2. The method according to claim 1, **characterized in that** at least one of the following values such as resolution, image size and image file format are standardized for the recorded biometric data (100, 102, 104, 106) with the sensor-dependent parameters.

3. The method according to claim 1 or 2, **characterized in that** during standardization at least one of the following steps such as geometric equalization, vignetting correction, noise suppression and adjustment of sharpness is used.

4. The method according to one of the claims 1 to 3, wherein said sensor (1.3, 8) is connected locally with a device (1), therein said sensor-dependent parameters are stored in a remote server and wherein the remote server (6, 7) is connected with said device (1) for comparing the biometric data (108).

5. The method according to claim 4, wherein the comparison is performed is said remote server (6, 7) and the recorded biometric data are sent to the remote server (6, 7).

6. The method according to claim 4, wherein the comparison is performed locally in said device (1) and said sensor-dependent parameters are sent to the device (1).

7. The method according to one of the claims 4 to 6, wherein said biometric reference data are stored in a chip card (1.4) in said device (1).

8. The method according to one of the claims 1 to 7, wherein said sensor (1.3, 8) extracts numeric parameters (104) from the recorded biometric data (100, 102) and the extracted numeric parameters (104) are used for said comparison (112).

9. The method according to one of the claims 1 to 8, wherein a hash (106) is generated from the recorded biometric data and the hash (106) is used for said comparison (112).

10. The method according to claim 1 to 9, wherein the recorded biometric data are linked with other identification data of the user or a device (1) of the user.

11. The method according to claim 10, wherein said other identification data of the user or of the device (1) are read from the chip card (1.4).

12. The method according to one of the claims 1 to 11, **characterized in that** the biometric reference data are stored in standardized fashion.

13. The method according to one of the claims 1 to 11, **characterized in that** the biometric reference data and parameters from the sensor with which the reference data have been recorded are stored.

14. The method according to one of the claims 1 to 13, **characterized in that** a comparison algorithm is used for determining the probabilities that the recorded biometric data correspond to every possible biometric reference data, whereas the comparison algorithm takes into account the parameters dependent on the sensor (1.3, 8).

15. The method according to claim 14, **characterized in that** the comparison algorithm uses a Viterbi algorithm in which the probabilities are weighed with said sensor-dependent parameters.

16. The method according to claim 14 or 15, **characterized in that** the comparison algorithm users a Viterbi algorithm in which the probabilities are weighed with sensor-dependent parameters from the sensor (1.3, 8) with which the biometric reference data have been recorded.

17. The method according to one of the claims 1 to 16, wherein a sequence of biometric features is compared one after another.

18. The method according to one of the claims 1 to 19, wherein a fingerprint, an iris, retina or face scan, vein or voice recognition are used as biometric data.

19. A communication system for comparing biometric data (100, 103, 104. 106) recorded with different biometric sensor (1.3, 8) with reference data (110), consisting of
(a) a local device (1) that is connected with a biometric sensor (1.3, 8) for recording biometric data (100, 102, 104, 106) of the user, and
(b) a remote server (6, 7) in which the parameters dependent on the sensor (1.3, 8) are stored, whereas
(c) between the local device (1) and the remote server (6, 7) data can be exchanged,
**characterized in that**
(d) parameters dependent on the sensor (1.3, 8), which are for normalization of the biometric data (108) taken from the sensor (1.3, 8) are determined depending on the type of the sensor (1.3, 8) outside the sensor (1.3, 8), wherein the recorded biometric data (100, 102, 104, 106) are standardized with the parameters dependent on the sensor (1.3, 8) and the standardized biometric data (108) are compared with the biometric reference data (110).

20. The communication system according to claim 19, **characterized in that** the biometric reference data (110) are stored in the remote server (6, 7) or in the local device (1).

## Revendications

1. Une méthode pour comparer des données biométriques enregistrées avec des capteurs biométriques différents (1.3, 8) avec des données de référence, avec les étapes de méthode suivantes:
(a) des données biométriques (100, 102, 104, 106) sont enregistrées avec le capteur biométrique (1.3, 8),
(b) le type de capteur est déterminé, et
(d) les données biométriques enregistrées (108) sont comparées avec les données de référence (110),
**caractérisée en ce que**
(d) des paramètres dépendants du capteur (1.3, 8), qui servent à la normalisation des données biométriques (108) enregistrées par le capteur (1.3, 8) sont déterminées en-dehors du capteur (1.3, 8) en fonction du type de capteur (1.3, 8), les données biométriques enregistrées (100, 102, 104, 106) étant dans une première étape normalisées avec les paramètres dépendants du capteur (1.3, 8) et les données biométriques normalisées (108) étant comparées dans une deuxième étape avec les données biométriques de référence (110).

2. La méthode selon la revendication 1, **caractérisée en ce qu'**au moins une des valeurs suivantes résolution, la taille de l'image et le format du fichier image des données biométriques enregistrées (100, 101, 104, 106) sont normalisées avec les paramètres dépendants du capteur.

3. La méthode selon la revendication 1 ou 2, **caractérisée en ce que** pendant la normalisation au moins une des étapes suivantes correction géométrique, correction de vignettage, réduction du bruit et ajustement de la netteté est utilisée.

4. La méthode selon l'une des revendications 1 à 3, selon laquelle ledit capteur (1.3, 8) est connecté localement avec un dispositif (1), selon laquelle lesdits paramètres dépendants du capteur sont sauvegardés dans un serveur à distance et selon laquelle le serveur à distance (6, 7) est connecté avec ledit dispositif (1) pour comparer les données biométriques (108),

5. La méthode selon la revendication 4, selon laquelle la comparaison est effectuée dans ledit serveur à distance (6, 7) et les données biométriques enregistrées sont envoyées au serveur à distance (6, 7).

6. La méthode selon la revendication 4, selon laquelle la comparaison est effectuée en local dans ledit dispositif (1) et lesdits paramètres dépendants du capteur sont envoyés au dispositif (1).

7. La méthode selon l'une des revendications 4 à 6, selon laquelle lesdites données biométriques de référence sont stockées sur une carte à puce (1.4) dans ledit dispositif (1),

8. La méthode selon l'une des revendications 1 à 7, selon laquelle ledit capteur (1.3,8) extrait des paramètres numériques (104) des données biométriques enregistrées (100, 102) et les paramètres numériques extraits (104) sont utilisés pour ladite comparaison (112).

9. La méthode selon l'une des revendications 1 à 8, selon laquelle un hash (106) est généré à partir des données biométriques enregistrées et le hash (106) est utilisé pour ladite comparaison (112).

10. La méthode selon les revendications 1 à 9, selon laquelle les données biométriques enregistrées sont liées avec d'autres données d'identification de l'utilisateur ou d'un dispositif (1) de l'utilisateur.

11. La méthode selon la revendication 10, selon laquelle lesdites autres données d'identification de l'utilisateur ou du dispositif (1) sont lues depuis la carte puce (1.4).

12. La méthode selon l'une des revendications 1 à 11, **caractérisée en ce que** les données biométriques de référence sont sauvegardées de manière normalisée.

13. La méthode selon l'une des revendications 1 à 11, **caractérisée en ce que** les données biométriques de référence et les paramètres du capteur, avec lequel les données de référence ont été enregistrées, sont sauvegardés.

14. La méthode selon l'une des revendications 1 à 13, **caractérisée en ce qu'**un algorithme de comparaison est utilisé pour déterminer les probabilités que les données biométriques enregistrées correspondent à chacune des données biométriques de référence possibles, selon lequel l'algorithme de comparaison inclus les paramètres dépendants du capteur (1.3, 8).

15. La méthode selon la revendication 14, **caractérisée en ce que** l'algorithme de comparaison utilise un algorithme Viterbi dans lequel les probabilités sont pondérées avec lesdits paramètres dépendants du capteur.

16. La méthode selon la revendication 14 ou 15, **caractérisée en ce que** l'algorithme de comparaison utilise un algorithme Viterbi dans lequel les probabilités sont pondérées avec lesdits paramètres dépendants du capteur (1.3, 8) avec lequel les données biométriques de référence ont été enregistrées.

17. La méthode selon l'une des revendications 1 à 16, dans laquelle une séquence de caractéristiques biométriques est comparée l'une après l'autre.

18. La méthode selon l'une des revendications 1 à 17, dans laquelle une empreinte digitale, un scanning d'iris, de rétine ou de visage, une reconnaissance de veines ou de voix sont utilisés comme données biométriques.

19. Système de communication pour comparer des données biométriques (100, 103, 104, 106) enregistrées avec différents capteurs biométriques (1.3, 8) avec des données de référence (110), composé
(a) d'un dispositif local (1) qui est connecté avec un capteur biométrique (1.3, 8) pour enregistrer des données biométriques (100, 102, 104, 106) de l'utilisateur, et
(b) d'un serveur à distance (6, 7) dans lequel les paramètres dépendants du capteur (1.3, 8) sont sauvegardés, selon lequel
(c) des données peuvent être échangées entre le dispositif local (1) et le serveur à distance (6, 7),
**caractérisé en ce que**
(d) les paramètres dépendants du capteur (1.3, 8), qui servent à la normalisation des données biométriques (108) enregistrées par le capteur (1.3, 8) sont déterminés en-dehors du capteur (1.3, 8) en fonction du type de capteur (1.3, 8), les données biométriques enregistrées (100, 102, 104, 106) étant normalisées avec les paramètres dépendants du capteur (1.3, 8) et les données biométriques normalisées (108) sont comparées avec les données biométriques de référence (110).

20. Le système de communication selon la revendication 19, **caractérisé en ce que** les données biométriques de référence (110) sont sauvegardées dans le serveur à distance (6, 7).
